# EUROPEAN PATENT APPLICATION

(11) **EP 2 778 887 A2**
(43) Date of publication of application: **17.09.2014**
(21) Application number: 14160338.1
(22) Date of filing: 17.03.2014
(51) Int. Cl.: G06F 3/0488

(54) **Interactive display device**

(30) Priority: 15.03.2013 US 201313842272
(71) Applicant: Micro Industries Corporation, Lewis Center, OH 43035 (US)
(72) Inventor: Curran, Amanda, Westerville, OH Ohio 43082 (US); Curran, Michael, Westerville, OH Ohio 43082 (US); DeGenova, Jon, Sunbury, OH Ohio 43074 (US)
(74) Representative: Wilson, Glen

(57) **Abstract**

The present invention is an apparatus for communicating information comprised of an electronic display device, a touch sensitive input device positioned to substantially cover said display device, a computerized device in electronic communication with the display and the input device, and an algorithm executing on the computerized device. The algorithm causes a two-dimensional array of three-dimensional shapes to appear on said display and rotate about an axis and undulate in a wave-like manner without interaction from a viewer during an attract mode. After the touch sensitive input device is contacted by a user, the algorithm may display an interaction mode wherein the shapes may be caused to rotate about an axis by a user's contacting the touch sensitive input device at a point on the display device corresponding to a three-dimensional shape and moving such a contact point in the direction of rotation to expose information displayed on the surface of the three-dimensional shape.

## Description

### BACKGROUND AND SUMMARY OF THE INVENTION

Exemplary embodiments of the present invention relate generally to a novel method of presenting information on an interactive display device in order to attract attention to the device and encourage a user to interact with the device. Prior methods of presenting information on an electronic display have included slide shows, non-interactive video, and audio presentations. These methods allowed a viewer to select information on the display in order to view that information in greater detail, initiate a computer program such as a video presentation, view maps, or interface to information systems such as catalogs and order entry forms. Such past methods were limited to presenting only the information that would fit on a single display or relied on cumbersome and non-intuitive menu systems.

The present invention is directed at an apparatus and method for displaying a plurality of information sources on the faces of a plurality of three-dimensional geometric shapes, where such shapes are arranged in a two-dimensional array. Such shapes may comprise cubes, pyramids, polygons, cylinders, or other geometric shapes. As an example, a cube shape has front, back, left, right, top, and bottom faces. In this manner, each geometric shape may have a plurality of faces, each of which may contain an information source. When presented to a viewer or user, a geometric shape may be displayed such that a face containing an information source is facing the viewer or user. To encourage interaction with a viewer or user, the geometric shape may be displayed in a perspective manner such that the viewer or user is able to see that there are other faces on the geometric shape and those other faces may also contain information. In such a manner, a greater amount of information may intuitively be accessed than would fit on a single screen view of a display device using a traditional menu structure display method.

The present invention may include an attract mode which displays a plurality of information sources in a manner that presents the three-dimensional geometric shapes in a two-dimensional array which is itself displayed in a perspective view. When displayed in such a perspective view, the geometric array of information sources may be caused to move about or undulate in a wave-like manner. When in such an attract mode, the geometric shapes may be caused to rotate about an axis where such rotation allows a view of more than one face of the geometric shape as the shape rotates. Such a moving about and rotation motion of the array and geometric shapes may serve to attract the attention of a passer-by such that the passer-by may wish to interact with the display or stop to observe the displayed array of shapes for a period of time. A further benefit of the moving about and rotation may be that a viewer observes that the geometric shapes may be rotated to expose additional faces.

Such an interactive display device may be provided with a touch screen interface that allows a user to interact with the display device by touching the display surface of the display device. As touch screen devices become more common, the concept that someone might interact with a display by touching it becomes more intuitive, further increasing the likelihood that a passer-by may stop and touch the screen of a display device. Other methods of interaction may include devices in communication with the display device that detect movement in order to detect a viewer and potential user approaching the display device. Such devices may cause the images on the screen to react to the presence or movement of such a viewer.

When a viewer's attention is captured by the attract mode, that viewer may start to interact with the display device or be detected by the device. When a viewer is detected or starts to interact with the display device, the attract mode may end and a user interaction mode may be caused to function. When in a user interaction mode, the array of geometric shapes may be caused to be displayed such that the array of geometric shapes is presented to the viewer in a vertical row and horizontal column format. Each geometric shape may be presented in a perspective view such that shapes located near the center of the array may be presented as if the viewer were positioned directly in front of the shape. In such a view, shapes near the top of the array may be presented in a perspective such that it appears that the viewer is positioned slightly below the shape. Shapes near the bottom of the array may be presented to appear slightly below the viewer, shapes on the left may appear to the left perspective of the viewer, and shapes to the right may appear to the right perspective of the viewer. When presented in such perspective views, the array of shapes may be perceived in a three-dimensional manner, appearing as if the shapes were suspended in front of the viewer.

When a viewer begins to interact with the display device, that person becomes a user of the device. When such a display device is equipped with a touch sensitive display screen, a user may cause a shape to rotate about an axis by dragging a finger across the shape in a dragging or "swiping" motion. When such a motion is approximately the length of a face of a geometric shape, the front facing panel of the geometric shape may rotate in the direct of the motion such that a new panel of that geometric shape is caused to face the front. In this manner, a user may cause the geometric shapes of the array to display faces that may not have been facing the user when the user's interaction with the display device began.

In order to add interest to the display, other motions may result in actions such as a distortion or wrinkle in the array of geometric shapes. When a user presses a finger against a face of a geometric shape for a predetermined period of time without substantially moving the finger, the shape may enlarge in size or change to a different shape to enable the display of a greater amount of information. When a shape is enlarged, additional information may be displayed on the face or the information may itself be enlarged for easier viewing. In an alternative embodiment, the information or images present on the enlarged shape may be different than what was displayed on the geometric shape before enlargement. When enlarging, the shape may appear to move toward the user and be positioned partially in front of the remaining geometric shapes. If desired, a user may cause the geometric shape to return to its original size by touching the enlarged shape a second time. Alternatively, the shape may return to its original size after being touched in a predetermined area of the enlarged displayed face, the shape may return to its original size after the user touches a different geometric shape, or the shape may return to its original size after a predetermined period of time elapses during which the user does not touch any geometric shape on the display device.

Additional functions may be implemented in an embodiment of the present invention to generate interest in the user. Surprising or entertaining functions may encourage the user to interact with the display device for a greater period of time. These additional functions may include surprise actions, hidden treasures, or puzzles. An example of a surprise action may be that when pressed as described above, instead of expanding, a geometric shape may appear to explode or perform some other unexpected action. A randomly selected or predetermined geometric shape may display a hidden treasure offering when selected by the user. Hidden treasures offered may be redeemed at nearby retailers. An embodiment of the present invention may include a function which displays a partial image on at least one face of each geometric shape. These partial images may be part of a larger image and when the geometric shapes are caused to rotate such that the partial images face the user; the images may be viewed together to form the larger image.

These additional functions may be implemented to include controls that function to limit the number of occurrences of surprise actions and hidden treasures awarded. Such controls may be implemented to require a predetermined period of time to elapse between each award of a prize and to limit the award of prizes to predefined periods of time and days of the week. Analytical features may be included in the functionality of an embodiment of the invention to allow information to be gathered from interactions with the display device. Such information may include the number of touches to the device, an estimated number of separate interactions, the location of panels selected most often by users, and the average amount of time spent viewing each panel. Additional analytic functions may be implemented to provide feedback to an organization placing specific pieces of information in an embodiment of the invention to allow that organization to optimize the informational content presented to users. This feedback may comprise information such as the number of user selections of a particular piece of information, the amount of time that a user views that information, and other combinations of analytical data related to displayed information which an organization may use to optimize the information available on the display device.

In addition to the novel features and advantages mentioned above, other benefits will be readily apparent from the following descriptions of the drawings and exemplary embodiments.

### BRIEF DESCRIPTION OF THE DRAWINGS

Figure 1 is a diagram of an exemplary embodiment of an interactive display device;
Figure 2 is a diagram of an exemplary screen image of a two-dimensional array of three-dimensional shapes;
Figure 3 is a diagram of an exemplary image of the same three-dimensional shape shown from three different perspectives;
Figure 4 is a diagram illustrating an exemplary embodiment of an oscillating two-dimensional array of three-dimensional shapes;
Figure 5 is a diagram illustrating an exemplary embodiment of an oscillating two-dimensional array of three-dimensional shapes where the shapes are also rotating about an axis;
Figure 6 is a diagram illustrating an exemplary embodiment wherein a finger is causing a shape to rotate about an axis;
Figure 7 is a diagram illustrating an exemplary embodiment of a selected shape appearing to expand outward from an array of shapes;
Figure 8 is a diagram illustrating an exemplary embodiment of a selected shape that has expanded into a larger display area; and
Figure 9 is a flow chart of a remote image retrieval process.

### DETAILED DESCRIPTION OF EXEMPLARY EMBODIMENT(S)

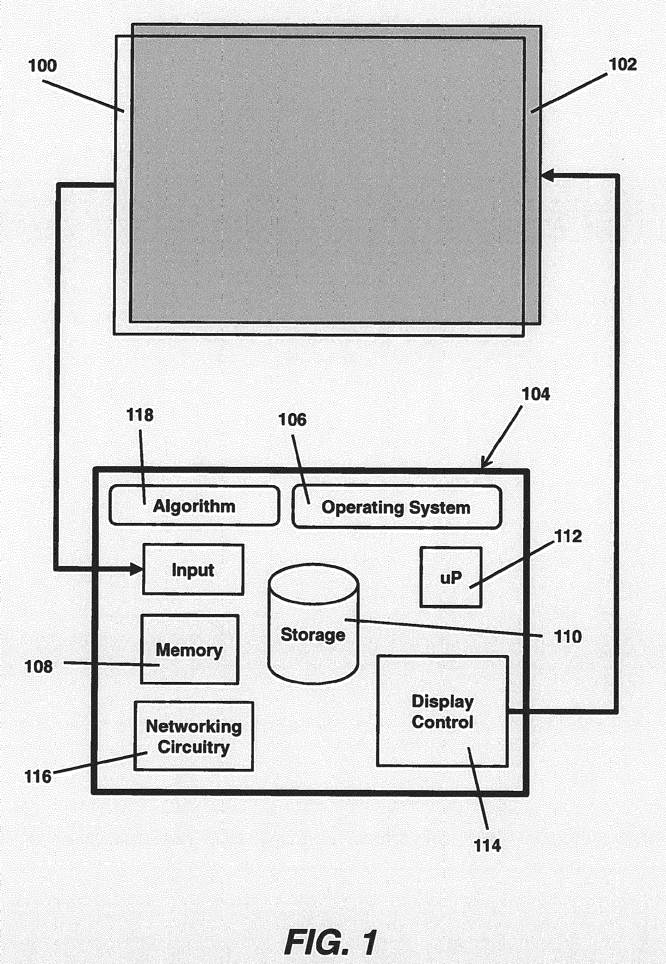

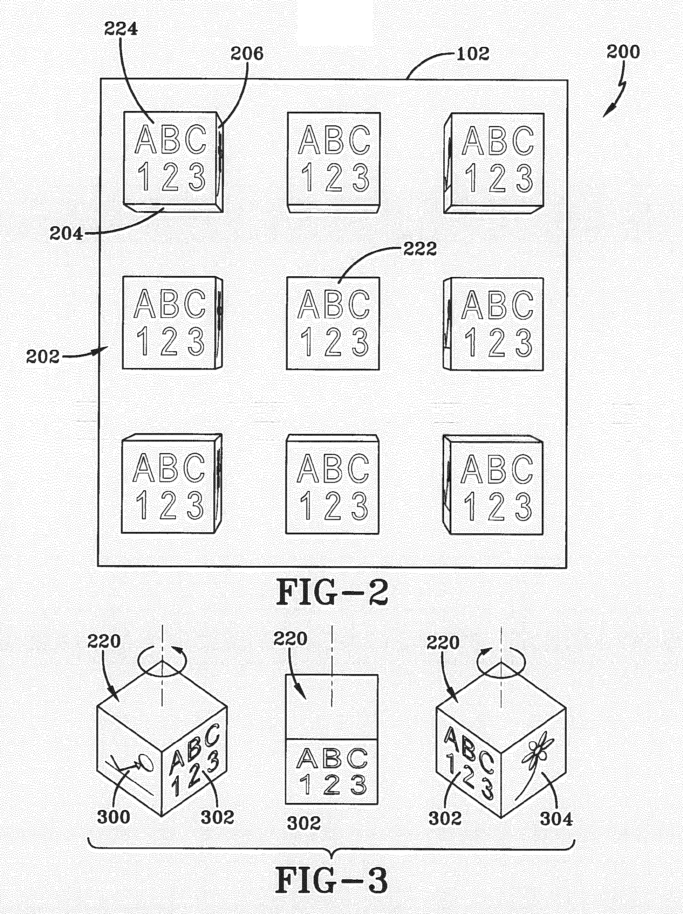

Referring to **Figure 1****,** in an exemplary embodiment of the present invention, a substantially transparent touch sensitive input device **100** may be attached to an electronic display device **102** such that the surface of the touch sensitive input device is parallel with, and substantially covering the surface of the display device. One skilled in the art will realize that such touch sensitive input devices are frequently combined with electronic display devices into a single assembly. Such a combination may be implemented in an embodiment of the invention. Other methods of near-display movement detection may be used as an alternative to touch sensor input devices in other embodiments of the invention. Such other methods may include, but are not limited to, motion sensors, camera-based movement detectors, facial recognition devices, and infrared beam interruption detectors. References to touch sensitive input devices herein should not be limited to separate devices as illustrated in the embodiment of **Figure 1** but should also be understood to include the alternative devices just described. A computer device **104** may be placed in electronic communication with the touch sensitive input device **100** and the electronic display device **102** such that the computer device may cause images to appear on the display device and input device may communicate information to the computing device as the result of touch actions being detected by the touch sensitive input device. The computing device **104** may comprise an operating system **106,** memory **108,** a disk drive or equivalent storage device **110,** a processor **112,** a graphics interface circuitry **114,** and networking circuitry **116.** The computing device **104** is programmed with a software algorithm **118** which implements an embodiment of the present invention. Referring to **Figure 2****,** such an algorithm **118** may configure the computing device **104** to display a two-dimensional array 200 of three-dimensional shapes **202** on the display device **102.** Although for clarity **Figure 2** illustrates an array **200** that comprises nine three-dimensional shapes **202;** such an array may comprise a larger or smaller number of such shapes. Three-dimensional shapes **202** contained within the array **200** may be cubes, polygons, pyramids, cylinders, or other three-dimensional shapes. Each shape **202** may have a plurality of sides (faces) as is illustrated in **Figure 3** as **300, 302,** and **304.** Additional faces may exist but not be visible depending upon the position of the shape in the array and the presence of any instruction from the algorithm to rotate or otherwise move the shape within the two-dimensional array **200.**

Referring to **Figure 3****,** a single three-dimensional shape **220** is shown from three different viewing perspectives. In this representative embodiment, the illustrated shape is a cube. As is illustrated in the figure, each visible face **300, 302,** and **304** of the three-dimensional shape **220** may display image content. A video image is illustrated at **300.** Such a video image may be "played" continuously or may be played when selected by a user as described below. An animation (which one skilled in the art will understand to be distinct from a video image) may be displayed on at least one face of a three-dimensional shape. Such an animation may animate continuously or animate when selected by a user as described below. Textual information, such as shown at **302,** may be based on information stored in the memory **108** or disk storage **110** of the computer device **104** or may be obtained by the algorithm from sources external to the computer device via networking circuitry **116.** Such external sources may comprise emails, twitter feeds, RSS feeds, web pages, traffic cameras, weather cameras, or other sources familiar to one skilled in the art. A photograph or other format of still image may be displayed on a face as is shown at **304.** As in the case of textual information, such images may be retrieved from the memory **108** or disk storage **110** of the computing device **104** or may be obtained from sources external to the computer device and stored in a memory or disk storage location for display on a face.

As was described above, a two-dimensional array **200** of three-dimensional shapes **202** may be displayed. Each three-dimensional shape **202** of the plurality of shapes comprising the two-dimensional array **200** may have faces comprising different selections of content. Content is not required to be displayed on all available faces of a three-dimensional shape **202.** Faces which do not contain content may display a predetermined color or pattern.

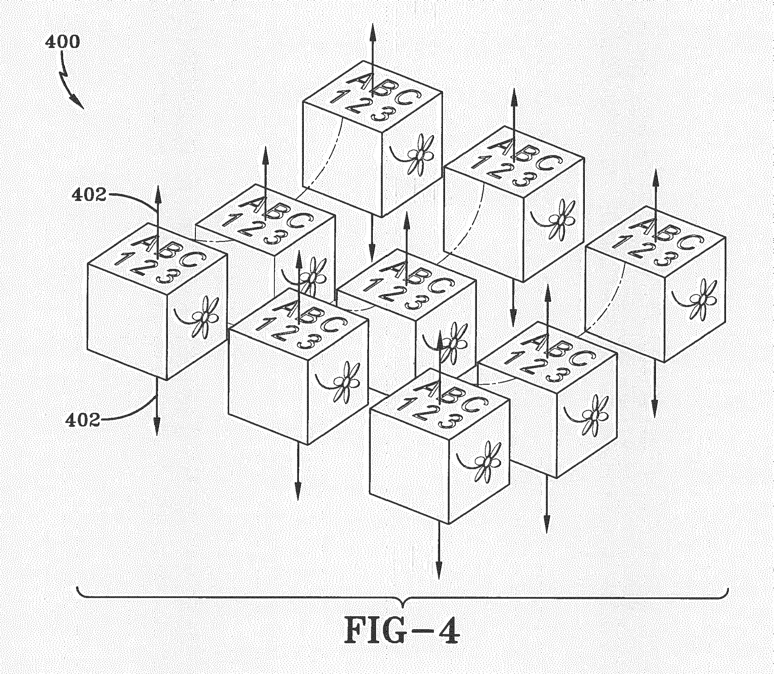

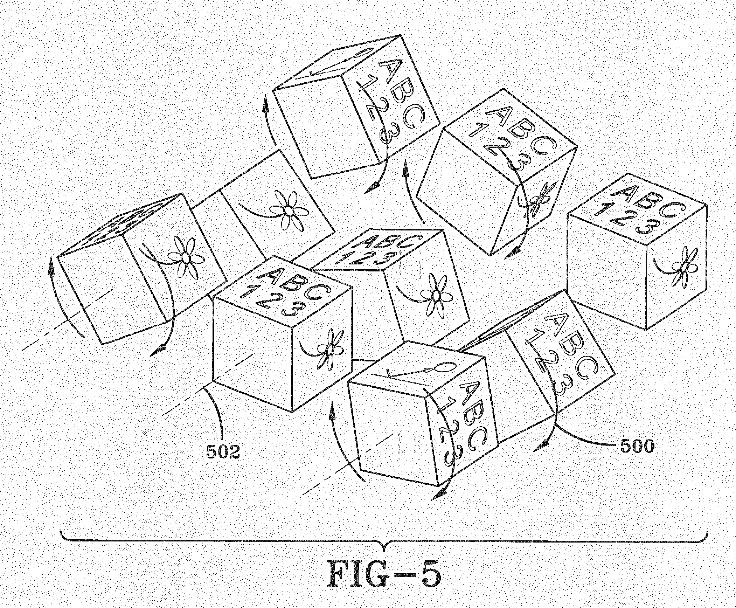

The algorithm **118** may comprise multiple modes of displaying the two-dimensional array **200** of three-dimensional shapes **202.** One such mode, referred herein as "attract mode" may display the two-dimensional array **200** of three-dimensional shapes **202** in a manner intended to attract attention to the display device **102.** After a predetermined amount of time during which there has been no contact with the touch sensitive input device **100** or other stimulus received by the algorithm **118,** the two-dimensional array **200** may be caused to be displayed in a perspective mode **400** as illustrated in **Figure 4****.** Referring again to **Figure 4****,** in an embodiment of the invention, the algorithm **118** may cause the two-dimensional array **200** to appear to oscillate **402** in a wave-like manner along one or both axis of the array. Referring to **Figure 5****,** another embodiment of the invention may also display the three-dimensional shapes **202** such that they appear to be rotating **500** about an axis **502** while the array of shapes **200** oscillates **402** as previously described. In such an embodiment, the three-dimensional shapes **202** may rotate **500** at different rates.

When a triggering event occurs while the algorithm **118** is displaying the attract mode as described above, the algorithm may cause the display to change to an "interact mode." A triggering event may be a contact with the touch sensitive input device **100,** a detection of motion in the proximity of the display device **102,** the expiration of a predetermined amount of time, a signal communicated to the computer device by networking circuitry **116** or other device in electronic communication with the computer device **104.**

As illustrated in **Figure 2****,** when in interact mode, the three-dimensional shapes **202** may be displayed in a two-dimensional array **200** where the shapes **202** are arranged in rows and columns. To illustrate to a viewer that the shapes **202** are three-dimensional rather than two-dimensional in nature, the shapes may be displayed in perspective with respect to a viewer positioned directly in front of the display device **102.** Such a perspective view is illustrated in **Figure 2****,** where a first shape **222** appears to be directly in front of the viewer such that there is no visible view of the top, bottom, or sides of the shape. To simulate perspective, a second shape **224** may appear to be above and to the left of the viewer. Such a perspective is created by allowing the bottom face **204** and right side face **206** of the shape to be visible. The remaining shapes displayed in the two-dimensional array may be made to appear above, below, and to the left or right of the first shape **222** to further reinforce the perspective view of the shapes contained in the two-dimensional array.

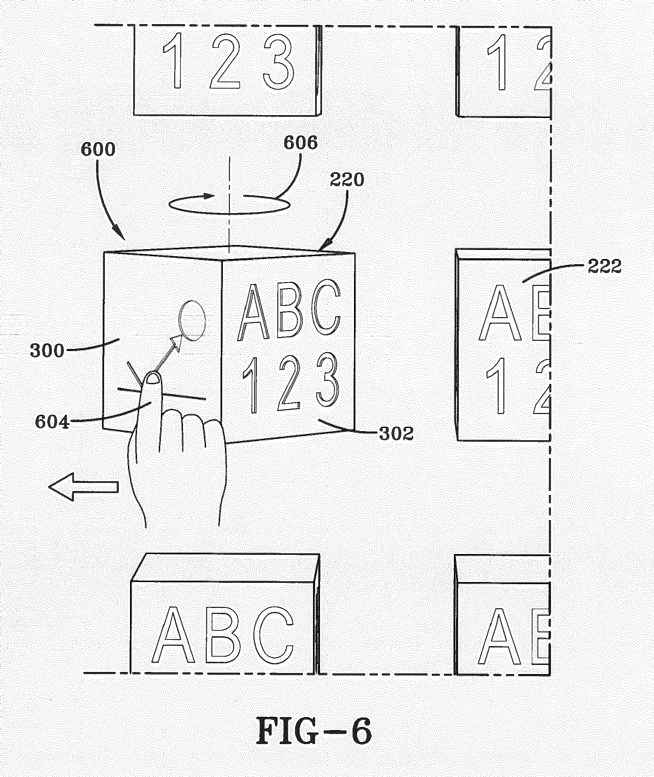

When a viewer interacts with the displayed images by making contact with the touch sensitive input device, that viewer becomes a "user." The algorithm **118** may allow a user to cause a three-dimensional shape **202** to rotate to expose additional faces. Referring to **Figure 6****,** a user may touch the touch sensitive input device in an area **600** that corresponds to a first face **300** of a displayed three-dimensional shape **220.** When user touches and drags a finger **604** horizontally along the face of a shape **220,** that shape may rotate **606** in a three-dimensional manner in the direction of the dragging motion at a velocity relative to the velocity at which the finger is dragging. When a user drags a finger **604** slowly horizontally across the face of a shape **220,** the three-dimensional shape **220** may continue to rotate until the user stops the dragging movement. If a user drags a finger greater than a preset distance away from the three-dimensional shape, the two-dimensional array of shapes may be caused to distort as described below. When a user drags a finger quickly (flicks) horizontally across the face of a three-dimensional shape **220,** that shape will rotate quickly until it stops on the next face. When displayed in these manners, it may appear that the user is rotating an actual object rather than an illustration of such an object. When the shape **220** is rotated, a second face **302** may be exposed. When the user stops the dragging motion or stops contacting the touch sensitive input device **100,** the shape **220** may stop rotating and return to a perspective view as illustrated by a second shape **222** displayed on the display device **102.** Such a rotation function may allow a user to change the appearance of the displayed shapes **202** by rotating one or more shapes in the manner just described.

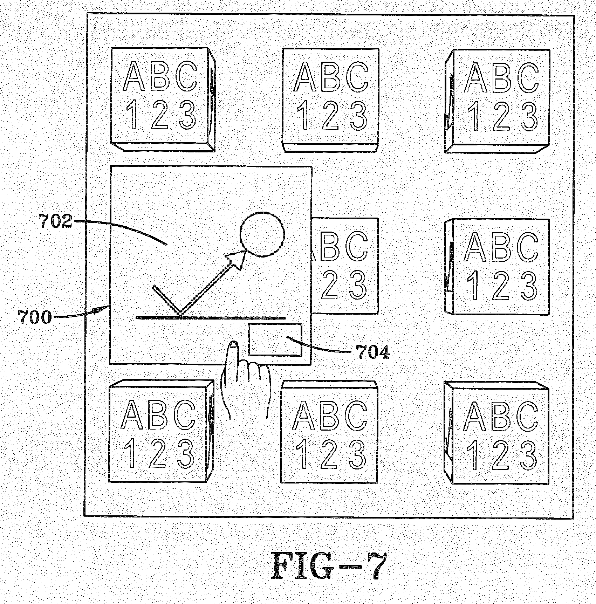

To select a shape or present a larger image to a user, the algorithm **118** may be configured to detect a signal from the touch sensitive input device **100** corresponding to a user touching a three-dimensional shape **202** without a dragging movement as described above (a simple single touch). Referring to **Figure 7****,** when the algorithm **118** detects such a signal, the algorithm may configure the computer device **118** to enlarge the three-dimensional shape touched **700.** By enlarging the three-dimensional shape **700,** text or images displayed on the outward facing face **702** may be enlarged for easier viewing. When enlarged, the three-dimensional shape may display the same image as was displayed prior to enlarging, hidden areas along the edges of the image may come into view as the shape is enlarged, or an entirely new image may be displayed. If the enlarged face contains a video image **704** or animation, such an image or animation may be caused to play if the algorithm **118** is configured such that video images or animations do not play unless selected by a user.

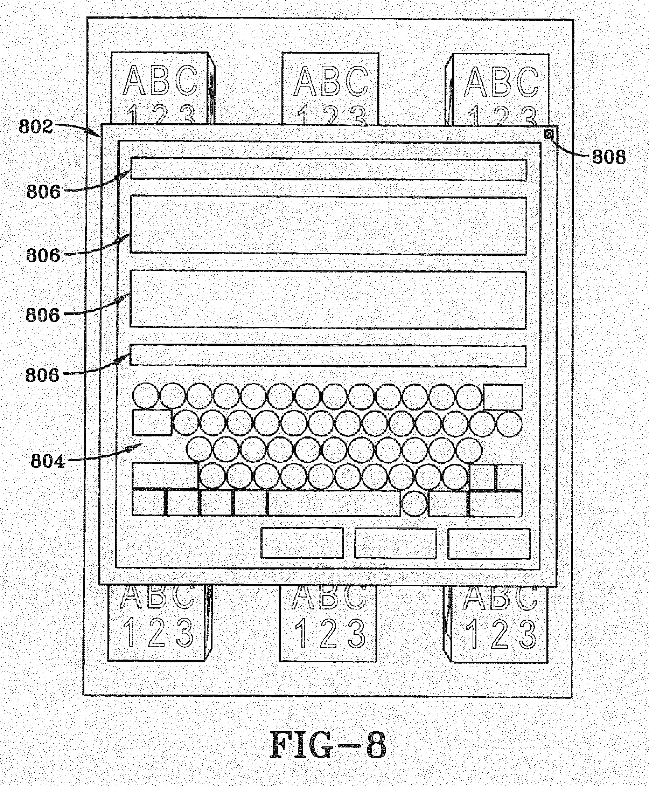

Referring to **Figure 8****,** in another embodiment of the invention a touch without a dragging movement (a simple single touch) may cause the computer device to display a rectangular display area **802.** Such a rectangular area may be configured to receive input from a user through the use of a virtual keyboard **804** in order to facilitate the entry of information such as a user's email address, telephone number, notes, user suggestions or other messages into text entry portion (or portions) **806** of the display area. In an embodiment of the invention a rectangular display area **802** may be used to display written information that is too large to fit into the three-dimensional shape. In this embodiment of the invention, a user may be able to scroll up or down to read additional text by dragging a finger up or down on the touch sensitive input device. Examples of when such an embodiment may be useful may be the display of RSS feed information, blog entries, email, or news articles. This rectangular display may also result from a user touching, without a dragging movement (a simple single touch), an already enlarged three-dimensional shape **700.**

An embodiment of the rectangular display area **802** may be used to display map information. Such a larger display area **802** may be more likely to encourage user interaction with a map as a result of the larger geographic area displayed. In such an implementation, a user may scroll the map display in two dimensions by dragging a finger up and down, left and right. Areas of interest may be highlight on such a map and an embodiment of the invention may be configured to respond to a user's touch by displaying additional information about the location touched.

When equipped with a camera device in electronic communication with the computer device, an embodiment of the invention may present a user with an image capture algorithm that causes the camera device to capture images of the user and display the images on the display device in an amusing manner. To encourage continued interaction with such an embodiment of the invention, a function may be enabled to allow a user to email the images by entering email addresses using a virtual keyboard **804** displayed in a portion of the rectangular display area **802.** Also illustrated in **Figure 8** is a control for causing a display area to revert to the three-dimensional shape from which it was caused to appear. This control is shown as an image **808** in a corner of the display area **802.** Alternatively, a "close" button or similar control may be enabled and displayed. Such methods of causing a display area to revert to the three-dimensional shape from which it was caused to appear may be applied to enlarged three-dimensional shapes **700** as illustrated in **Figure 7****.**

Additional functions may be implemented in the algorithm **118** to retain a user's interest in the images displayed on the display device **102.** Such functions may be beneficial in that a longer interaction time with a user may result in greater opportunity to convey information to a user.

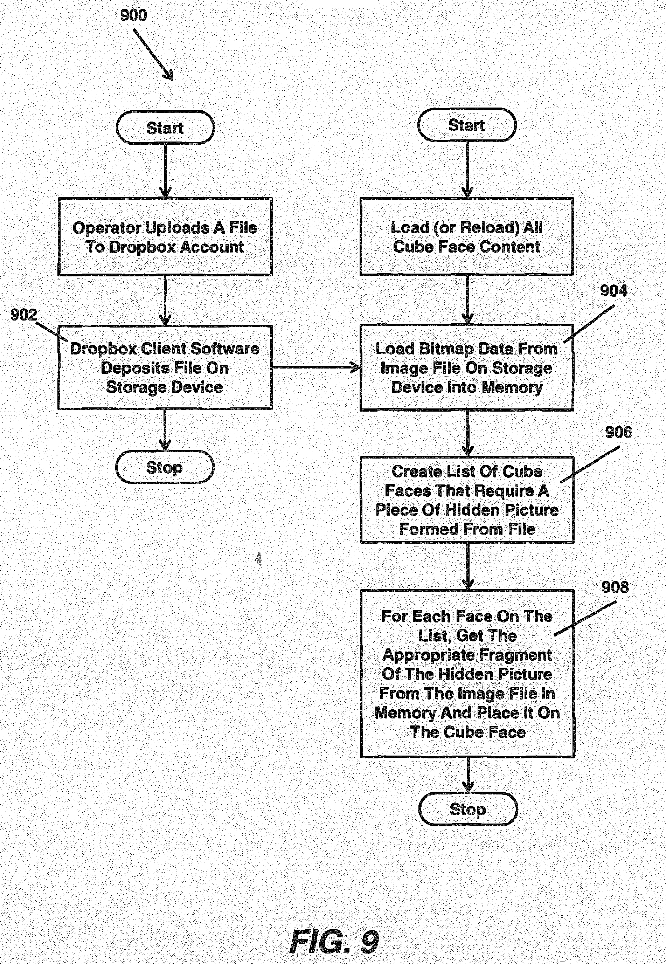

In order to attract attention and retain a user's interest in what is displayed on a display device **102,** an embodiment of the invention may include functions such as games, puzzles, and unexpected features (Easter Eggs). One such function may be comprised of an image, segments of which are distributed across the array of three-dimensional shapes **202.** When such an image is distributed to predetermined faces of each of the three-dimensional shapes **202,** a user may rotate each shape to display an image segment (sub-image). When all sub-images are thus displayed, the complete image may be viewed. In order to encourage repeat interactions with the algorithm and display device, the image may be changed from time to time. A display device **102** implementing the algorithm **118** may be located a great distance from the physical location of those responsible for managing the content displayed on the faces of the previously described three-dimensional shapes **202.** For ease of use in an embodiment of the invention, an operator may use a service such as Dropbox (Dropbox Corporation, www.dropbox.com) to provide a convenient means for communicating new content to the computerized device **104** executing the algorithm **118.** Other file transmission services may be used as an alternative to Dropbox. Referring to **Figure 9****,** which is a flow chart **900** of an embodiment of the process used to retrieve image file content from the Dropbox transmission service, in step **902,** a Dropbox client program which may be executed by the computerized device **104,** deposits a image file on the storage device **110** of the computerized device. In step **904** the algorithm **118** retrieves the image file from the storage device. In step **906** a list of three-dimensional shapes which require a portion of the image file may be generated. The algorithm divides the image into a number of sub-images based on the number of three-dimensional shapes found in the list of step **906.** In Step **908,** the sub-images are placed on at least one face of each three-dimensional shape **202** found on the list generated in step **906.** As was previously described, when a user turns the three-dimensional shapes **202** to expose the sub-images, a larger image which corresponds to the image file loaded into the Dropbox account or a similar service by the operator is gradually exposed.

Another function which may be implemented by the algorithm is a "rubber band" dragging action. Such a function may cause the three-dimensional shapes **202** contained in the two-dimensional array **200** to be distorted in a stretching or constricting manner when a user contacts a point of the touch sensitive input device **100** and causes that touch point to move along the touch sensitive input device for a predetermined distance that is more than the length of a first face **303** of the three-dimensional shape. The algorithm **118** may receive a signal from the touch sensitive input device **100** that corresponds to the contact and movement just described. When the algorithm **118** receives such a signal, it causes the computer device **104** to distort the two-dimensional array **200** displayed in the display device **102** in a manner which appears as if the surface of the display device where being stretched or constricted by the contact and movement received by the touch sensitive input device **100.** When the algorithm **118** no longer receives a signal indicating the touch sensitive input device **100** is being contacted, the computer device **104** may allow the image in the display device **102** to revert back to the non-distorted image of the three-dimensional shapes **202** contained in the two-dimensional array **200.**

Additional interest may be generated by a display that has certain surprise or unexpected reactions (Easter Egg effects) to a user's inputs. Such a surprise may be created if a three-dimensional shape **202** were to react in a dramatic and unexpected manner. Such a surprise result may be achieved by causing a three-dimensional shape **202** to rapidly break into pieces and move quickly away from the point at which they were originally located. Such movements may simulate an explosion. Other examples of a possible surprise action as the result of a user's input may be a shape appearing to rapidly move off the display device (explode off the screen), a shape appearing to bounce around the display area, a shape appearing to catch on fire, or a shape disappearing completely from the display. Due to the unexpected nature of this list, it should not be considered limiting as one skilled in the art will realize that many such unexpected actions will result in greater user interest in interacting with embodiments of the invention. The algorithm **118** may implement such a result by selecting a three-dimensional shape **202** that during a predefined time period, is caused to be displayed as a simulated explosion or other surprise action when a signal corresponding to a touch of the three-dimensional shape is received from the touch sensitive input device **100.** After a predetermined period of time, the three-dimensional shape **202** may reappear as if it had not exploded or otherwise reacted.

Users may be encouraged to interact with the interactive display device by the award of prizes or discounts. In an exemplary embodiment of the algorithm **118,** at least one face of at least one three-dimensional shape **202** may be configured to reveal a "hidden treasure" which could be a prize or discount when selected. Such a face and three-dimensional shape **202** may be preconfigured or randomly selected by the algorithm **118.** Such a hidden treasure may be a redeemable at a merchant or service counter located near the display device. Time periods during which a hidden treasure is be revealed may be preselected and may correspond to a time period during which the merchant or service counter is open for business. Such time periods may be selected to encourage a greater number of users to interact with the algorithm during desired times or during times which the merchant or service counter seeks to increase its number of visitors. The total available number of hidden treasures and the number of hidden treasures awarded during a period of time may also be preselected to further control the number of prizes or discounts awarded.

To provide information regarding user interaction with an interactive display device as described herein, a data logging and analytics function may be included in an embodiment of the algorithm **118.** Such a function may record information such as the number of interactions between a user and the interactive display device, the time of day of the interactions, the length of time of each interaction, average interaction time per day, number of prizes or discounts awarded, time of day when prizes or discounts were awarded, and the number of times each face of a three-dimensional shape **202** was selected and the content of that face. Additional logging and analytics functions may be added by one skilled in the art to provide information specific to a location or content of such an interactive display device.

Any embodiment of the present invention may include any of the optional or preferred features of the other embodiments of the present invention. The exemplary embodiments herein disclosed are not intended to be exhaustive or to unnecessarily limit the scope of the invention. The exemplary embodiments were chosen and described in order to explain the principles of the present invention so that others skilled in the art may practice the invention. Having shown and described exemplary embodiments of the present invention, those skilled in the art will realize that many variations and modifications may be made to the described invention. Many of those variations and modifications will provide the same result and fall within the spirit of the claimed invention. It is the intention, therefore, to limit the invention only as indicated by the scope of the claims.

## Claims

1. An apparatus for communicating information comprising:
(a) an electronic display device for use by multiple members of the public, in a public or semi-public environment, as users stand in front of the electronic display;
(b) a touch sensitive input device;
(c) a computerized device in electronic communication with said display and said input device;
(d) an algorithm, installed on said computerized device, which configures said device to cause a two-dimensional array of three-dimensional shapes to appear on said display;
(e) said algorithm having at least a first mode of operation in which said array of said three-dimensional shapes is displayed in a perspective view wherein said three-dimensional shapes are adapted to rotate about an axis;
(f) said algorithm having at least a second mode of operation in which said array of three-dimensional shapes is displayed such that:
(1) a first dimension of said array forms a vertical axis;
(2) a second dimension of said array forms a horizontal axis; and
(3) said three-dimensional shapes are displayed in a perspective view relative to the viewer;
(g) said three-dimensional shapes have a plurality of faces;
(h) said faces display information from at least one data source; and
(i) when in said second mode of operation, said three-dimensional shapes may be caused to rotate about an axis by a user's contacting the touch sensitive input device at a point on the display device corresponding to a three-dimensional shape and moving such a contact point in the direction of rotation.

2. The apparatus of claim 1, further comprising an algorithm configured to cause at least one of said three-dimensional shapes to expand in size in response to the user's contacting the touch sensitive input device.

3. The apparatus of claim 2, further comprising an algorithm which displays an image that is different than the image displayed prior to said shapes expanding in size.

4. The apparatus of any preceding claim, further comprising an algorithm which is configured to causes a display area to appear on said display in response to the user's contacting the touch sensitive input device.

5. The apparatus of claim 4, further comprising an algorithm which configures said display area to display a map image which contains points of interest as desired by an operator of the apparatus.

6. The apparatus of claim 4 or 5, further comprising an algorithm which configures the display area to display at least one of a RSS feed, a twitter feed, or email messages.

7. The apparatus of any of claims 4 to 6, further comprising an algorithm which configures the display area with a virtual keyboard enabled to receives input from a user for the generation of at least one of email messages, user comments, or request for information.

8. The apparatus of any of claims 4 to 7, further comprising a digital camera in electronic communication with said computer device, said computer device causing images received from said digital camera to be displayed in said display area.

9. The apparatus of claim 8, further comprising an algorithm which receives instructions from a user to save said images for transmission to at least one other computing device.

10. The apparatus of any preceding claim, further comprising an algorithm configured to display information which enables a user to claim a prize or price discount from a merchant in response to the user's contacting the touch sensitive input device.

11. The apparatus of any preceding claim, further comprising an algorithm which displays said array of three dimensional shapes to be in motion in a wave-like manner, such algorithm being caused to function after a predetermined amount of time within which there has not been a user input to said apparatus.

12. A computerized method of attracting the attention of a view and communicating information to said viewer comprising the steps of:
(a) receiving a plurality of data, said data comprising:
(1) images; and
(2) information;
(b) displaying on a display device a plurality of three-dimensional geometric shapes, each shape:
(1) forming a portion of a two-dimensional array on said display device;
(2) comprising a plurality of faces; and
(c) displaying at least one of said images or information on at least one of said faces;

13. The computerized method of claim 12, further comprising the steps of:
(a) receiving a electronic signal from a touch sensitive input device; and
(b) rotating at least one of the plurality of three dimensional shapes about an axis as the result of the received electronic signal.

14. The computerized method of claim 12 or 13, further comprising the steps of:
(a) receiving a electronic signal from a touch sensitive input device; and
(b) expanding in size, at least one of the plurality of three dimensional shapes to display at least one of:
(1) an image found on the face of the three-dimensional shape;
(2) an image found on the fact of the three-dimensional shape displaying more of the image than was displayed before said electronic signal;
(3) an image not the same as what was originally displayed on the three-dimensional shape; and
(4) at least one of an video image or an animated image.

15. The computerized method of any of claims 12 to 14, further comprising the steps of:
(a) receiving a electronic signal from a touch sensitive input device; and
(b) displaying an area on the electronic display of claim 1, at least one of:
(1) a map image;
(2) a RSS feed;
(3) a virtual keyboard and data entry area, configured to enable a user to enter information into said data entry area, using said keyboard;
(4) an image, received from a digital camera in electronic communication with the computerized device of claim 1.
